# EUROPEAN PATENT APPLICATION

(11) **EP 4 535 157 A1**
(43) Date of publication of application: **09.04.2025**
(21) Application number: 23315378.2
(22) Date of filing: 04.10.2023
(51) Int. Cl.: G06F 3/12

(54) **COMPUTER IMPLEMENTED METHOD FOR GENERATING WORKING PARAMETERS OF A PRINTING APPARATUS, SYSTEM, COMPUTER PROGRAM AND COMPUTER-READABLE MEDIUM THEREOF**

(71) Applicant: ARMOR, 44100 Nantes (FR)
(72) Inventor: PALMIERI, Tania, 1006 Lausanne (CH); STOLLER, Cyril, 3073 Gümligen (CH); STAUB, Romeo, 3005 Bern (CH); PFISTER, Matthias, 3097 Liebefeld (CH)
(74) Representative: Oak & Fox

(57) **Abstract**

The invention relates to a computer implemented method (100) for automatically generating (GEN₁) working parameters of a printing apparatus comprising a coating module, an endless ribbon and an ink rejuvenation device, the method (100) comprising:
• Receiving at least one print quality score and/or at least one print quality metric, said print quality score and said print quality metric characterizing a print quality of a printed element printed by means of the printing apparatus,
• Automatically generating (GEN₁) adjusted working parameters of the printing apparatus using said at least one print quality score and/or using said at least one print quality metric.

## Description

### FIELD OF INVENTION

The present invention relates to a method for automatically generating working parameters of a printing apparatus. The invention further relates to a system, a computer program and a computer readable medium thereof.

### BACKGROUND OF INVENTION

A thermal transfer printer, or printing apparatus, is a machine that creates an image by melting ink from an ink donner film (ribbon) and by transferring selected parts of said melted ink at selective locations onto a thermal transfer image receiving sheet or material (substrate). Such printer usually comprises a print head and rollers to hold and unwind an inked ribbon onto rollers. In fact, in those types of printers, the ribbon is mounted onto a rigid core to be unwound during printing operation. The ink donor film therefore presents a limited length, comprises two ends and shall be disposed after use. Handling such ribbon is eased thanks to the presence of the core.

An alternative class of printing apparatuses uses an endless ribbon continuously coated and exposed to a printhead. In such printing apparatuses, an endless ribbon is transported such that a part of said endless ribbon is exposed to the print head and another part of said endless ribbon is dedicated to an "ink rejuvenation operation" whereby a new homogenous and plain coated layer of ink can be applied to the endless ribbon. The non-printed ink remaining onto the endless ribbon after one print may then be recovered to renew the coated layer for a next print. Therefore, multiple print cycles / recoating cycles may be run without changing the endless ribbon. Such type of printer is described in patent applications WO2022/128946, WO2022/128941 and WO2022/128929.

For all types of printers, quality assessment of the printing is essential to ensure optimal readability or decoding for a user using an appropriate device, as well as to ensure the integrity of the information encoded within. Therefore, it is essential to verify that predefined print quality criteria are met. When this is not the case, a way to overcome the problem is to adjust parameters of the printing apparatus. Such parameters can comprise parameters relative to the inked ribbon itself such as its dimensions or its mechanical properties, parameters relative to the ink layer, such as its thickness or its chemical composition, parameters relative to the configuration of the printing apparatus, such as a predetermined speed of a roller during printing operation, for example a drive roller, or the print head set-up.

Prior art solutions usually involve subjective assessment of printing, wherein the quality of prints is rated visually by an operator based on relevant print features. Those prior art methods have several drawbacks. A first drawback is that human assessment may lack precision, as it is based on a subjective appreciation of an operator, which could result in different print quality assessments affected to a same print depending on the operator. Another drawback of the prior art methods for print quality assessment is that they do not allow to evaluate not only the cause(s) of the poor printing quality (such as the component(s) of the printer responsible for it), but they also do not allow to quantify the influence of different parameters on the overall print quality. As a result, such prior art methods can lead to significative costs which are due to the time required to adjust parameters iteratively until a target quality is reached or due to the cost of replacing the printer to avoid for stopping printing operations for too long.

One objective of the present invention is to provide a method, a system thereof, a computer program product thereof and a computer readable medium thereof to limit the precited drawbacks.

### SUMMARY

According to a first aspect, the invention relates to a computer implemented method for automatically generating working parameters of a printing apparatus comprising a coating module, an endless ribbon and an ink rejuvenation device, the method comprising:
- Receiving at least one print quality score and/or at least one print quality metric, said print quality score and said print quality metric characterizing a print quality of a printed element printed by means of the printing apparatus ;
- Automatically generating adjusted working parameters of the printing apparatus using said at least one print quality score and/or using said at least one print quality metric

One advantage of the invention is to allow to improve the quality of printing.

Another advantage of the invention is to provide a method allowing for remote troubleshooting and/or remote calibrating of a printing apparatus.

Another advantage of the invention is to provide a method for precisely and efficiently determining parameters responsible for defects in printing.

In one embodiment, at least one print quality score and/or at least one print quality metric is generated using a human machine interface.

One advantage is to determine print quality indicators using input data provided by a user.

In one embodiment, at least one print quality score and/or at least one print quality metric is generated by processing a digitized image of the printed element.

One advantage is to calculate precisely at least one print quality score and/or at least one print quality metric.

In one embodiment, the method comprises:
- Receiving a digitized image of at least one printed element by means of a first communication interface, said digitized image comprising a plurality of digitized patterns distributed in a plurality of regions of interest;
- Performing the following steps by means of at least one calculator:
   ▪ Extracting at least one first value of interest from at least one region of interest among the plurality of regions of interest;
   ▪ Calculating at least one print quality score and/or calculating at least one print quality metric by respectively:
      I. Extracting at least one second value of interest distinct of the first value of interest and calculating said print quality score using the first value of interest and using the second value of interest and/or;
      II. Calculating said print quality metric using the first value of interest and using at least one value of reference ;

One advantage is to improve the speed of process to generate the adjusted working parameters.

In one embodiment, the method comprises:
- Receiving a reference image comprising a plurality of reference patterns distributed in a plurality of reference regions of interest;
- Extracting the value of reference from at least one of said plurality of reference regions of interest;
- Calculating at least one print quality metric using the first value of interest and using the extracted value of reference
the adjusted working parameters being automatically generated using said calculated at least one print quality metric.

One advantage is to generate the adjusted working parameters according to a predefined quality criterion.

In one embodiment, the method comprises a step of extracting a plurality of values of reference from the plurality of regions of interest to calculate a plurality of print quality metrics, the adjusted working parameters being generated using said calculated plurality of print quality metrics.

One advantage is to improve the accuracy of the generated adjusted working parameters.

In one embodiment, the first value of interest and the second value of interest are extracted from a same region of interest of the plurality of regions of interest.

One advantage is to evaluate the print quality in a specific area of the digitized image.

In one embodiment, the method comprises a step of extracting a plurality of values of interest from at least two distinct regions of interest of the plurality of regions of interest, the adjusted working parameters being generated using said plurality of values of interest.

In one embodiment, the first value of interest and/or the second value of interest characterize a print quality of at least one digitized pattern located in at least one region of interest of the plurality of regions of interest from which said first value of interest and/or said second value of interest are extracted.

In one embodiment, at least one print quality score and/or at least one print quality metric comprises at least one of the following indicators a contrast indicator, a print coverage indicator, a periodicity indicator, an edge raggedness indicator, an edge blurriness indicator, a pinholes indicator, a defect indicator, a blackness indicator, a stripe indicator, a text readability indicator, a linear print resolution indicator, a barcode readability indicator, a height scaling indicator, a rotation indicator, a siemens star resolution indicator, a quick response code (QR code) indicator.

In one embodiment, the method comprises calculating a plurality of print quality scores and calculating a plurality of print quality metrics and automatically generating the adjusted working parameters using said calculated plurality of print quality scores and said calculated plurality of print quality metrics.

One advantage is to improve the accuracy of the generated adjusted working parameters.

In one embodiment, the method comprises a step of extracting a plurality of image features from the digitized image, said plurality of image features at least comprising coordinates of at least one region of interest of the plurality of regions of interest.

One advantage is to allow to determine the position of the printed patterns on the digitized image.

In one embodiment, the method comprises receiving the initial working parameters of the printing apparatus and the adjusted working parameters are generated using said initial working parameters.

In one embodiment, the method comprises automatically generating at least one predicted print quality score and/or at least one predicted print quality metric by means of a machine learning algorithm using at least one digitized image as input data of said machine learning algorithm.

In one embodiment, the machine learning algorithm is trained using a training dataset comprising a plurality of training print quality scores and/or using a plurality of training print quality metrics of a plurality of training digitized images of a plurality of training printed elements.

In one embodiment, the plurality of training digitized images used to train the machine learning algorithm are labelled according to an expected human rating of their print quality.

In one embodiment, the predicted quality score and the predicted print quality metrics are automatically generated by:
- receiving at least one digitized image of at least one printed element by means of a first communication interface, said digitized image comprising a plurality of digitized patterns distributed in a plurality of regions of interest;
- Performing the following steps by means of at least one calculator:
   ▪ Extracting at least one first value of interest of at least one digitized pattern among the plurality of digitized patterns from at least one region of interest among the plurality of regions of interest;
   ▪ Calculating at least one print quality score and/or calculating at least one print quality metric by respectively:
      I. Extracting at least one second value of interest distinct of the first value of interest and calculating said print quality score using the first value of interest and using the second value of interest and/or,
      II. Calculating said print quality metric using the first value of interest and using at least one value of reference.

In one embodiment, the machine learning algorithm comprises a classifier and said machine learning algorithm is configured to perform a set of predefined rules for affecting at least one print quality class to the digitized image.

In one embodiment, the method comprises a step of automatically generating a command signal using the generated adjusted working parameters.

In one embodiment, the adjusted working parameters of the printing apparatus comprise at least one of the following parameters:
- a speed of at least one roller of a transporting system to transport an endless ribbon along a predefined path of said endless ribbon forming a loop and/or,
- at least one working parameter of a printhead and/or,
- at least one working parameter of a coating device and/or,
- a set temperature of a cooling device arranged to cool down a coated layer between a coating device and a printing zone and/or,
- a position of at least one drive roller in reference to the endless ribbon.

In one embodiment, the method comprises:
- printing a printed element on a printing support using the printing apparatus by:
   ▪ driving an endless ribbon of the printing apparatus along a predetermined path of said endless ribbon forming a loop;
   ▪ coating a first portion of a surface of the endless ribbon with a coating composition using a coating device of the printing apparatus;
   ▪ driving the printing support to a printing zone;
   ▪ transferring the coated coating composition from the endless ribbon to the printing support to print the printed element on said printing support using a printhead of the printing apparatus.
wherein the received print quality score and/or print quality metric characterize a print quality of said printed element.

In one embodiment, the method comprises acquiring a digitized image of the printed element using an optical detection device, transmitting the digitized image to at least one calculator using the communication interface and automatically generating the adjusted working parameters by automatically processing the digitized image.

In one embodiment, the method comprises automatically generating a command signal using the generated adjusted working parameters.

In one embodiment, the method comprises automatically transmitting the command signal to the printing apparatus.

According to another aspect, the invention relates to a computer implemented method for automatically generating working parameters of a thermal transfer printing apparatus, the method comprising:
- Receiving at least one print quality score and/or at least one print quality metric, said print quality score and said print quality metric characterizing a print quality of a printed element printed by means of the thermal transfer printing apparatus ;
- Automatically generating adjusted working parameters of the thermal transfer printing apparatus using said at least one print quality score and/or using said at least one print quality metric

One advantage of the invention is to allow to improve the quality of printing using a thermal transfer printing apparatus.

Another advantage of the invention is to provide a method allowing for remote troubleshooting and/or remote calibrating of a thermal transfer printing apparatus.

According to another aspect, the invention relates to a system comprising at least one calculator, said system being configured to execute the steps of the method according to the first aspect of the invention. The system may comprise a communication interface to receive at least one print quality score and/or at least one print quality metric. Alternatively, or in addition, at least one print quality score and/or at least one print quality metric may be calculated using the calculator.

In one embodiment, the system comprises the printing apparatus.

In one embodiment, the printing apparatus is a thermal transfer printing apparatus.

In one embodiment, the printing apparatus comprises a printhead adapted to perform printing operation without contact between the printhead and the endless ribbon.

In one embodiment, the system comprises an optical detection device.

According to another aspect, the invention relates to a computer program product comprising instructions to cause the system to execute the method of the invention.

According to another aspect, the invention relates to a computer-readable medium having stored thereon the computer program.

### BRIEF DESCRIPTION OF FIGURES

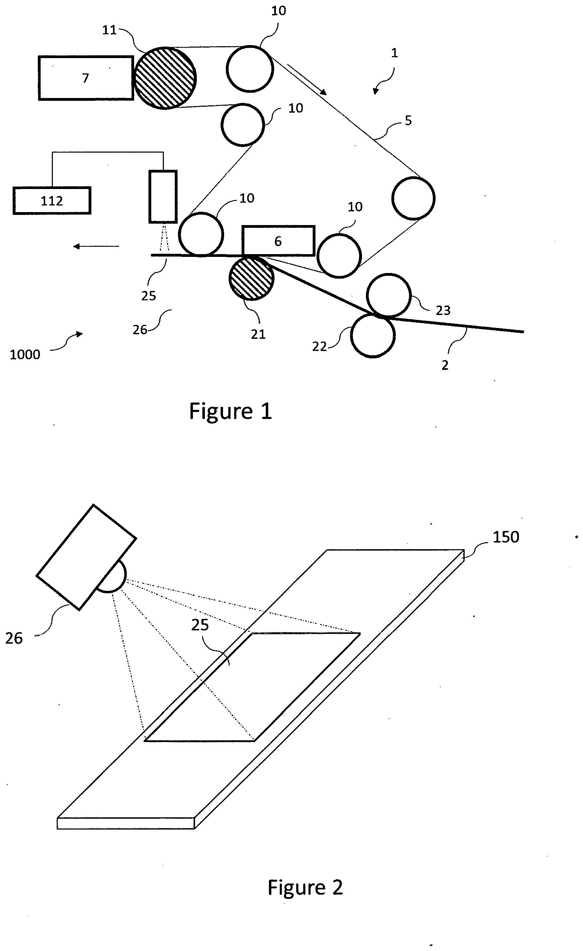

Fig. 1 is a schematic sectional view of a printing apparatus wherein the frame is not represented.
Fig. 2 is a schematic view of a system according to one aspect of the invention wherein the system comprises an optical detection device to detect and capture a printed element.
Fig. 3 is a schematic view of a digitized image comprising one digitized representation of a printed element, wherein the printed element is a printed label, and comprising a plurality of digitized printed patterns distributed in a plurality of regions of interest.
Fig. 4 is a schematic representation of a system of the invention according to one embodiment wherein the system comprises a printing apparatus, an optical detection device, a calculator, and a memory.
Fig. 5 is a schematic representation of steps of the method in one embodiment wherein the method comprises a step of automatically generating a command signal using adjusted working parameters generated using a digitized image of a printed element.
Fig.6 is a schematic representation of steps of the method in one embodiment wherein the method comprises a step of using a machine learning algorithm trained with training data comprising training print quality scores and training print quality metrics.
Fig.7 is a schematic representation of an example of hardware configuration of the system of the invention.

### DETAILED DESCRIPTION .

The invention will be better understood with the following specifications referring to the figures.

According to.a first aspect, the invention relates to a computer implemented method 100 for automatically generating GEN₁ adjusted working parameters Z_{adj} of a printing apparatus 1.

The invention is described through several embodiments in reference to the figures. The examples described for one embodiment may be directly applicable to another embodiment if compatible. The invention protects the different combinations of features described through all the embodiments.

For brevity, the computer implemented method 100 is referred to as "the method" in the following description.

In the present description, we refer to a "printed element 25". The printed element 25 may comprise a label, an electronic card, a plastic film or any other printing support adapted for printing at least one printed pattern Dp_{1, ...,} Dpₙ.

As such, the printed patterns Dp_{1, ..,} Dpₙ may comprise geometrical shapes, barcodes, OR-codes, conductive paths, decorative patterns, or any other printed element using a printing apparatus equipped with an endless ribbon 5 and an ink rejuvenation device.

### Metrics/score

The method 100 comprises a step of receiving at least one print quality score S_{Ci} and/or at least one print quality metric Pmᵢ.

The received print quality score S_{Ci} and/or print quality metric Pmi characterize a print quality of at least one printed portion of a printed element 25 printed by means of the printing apparatus 1.

It should be understood by "characterize a print quality of at least one printed portion of a printed element" that the received score(s) S_{Ci} and/or metric(s) Pmi may characterize a print quality in at least one given area of interest of the printed element 25.

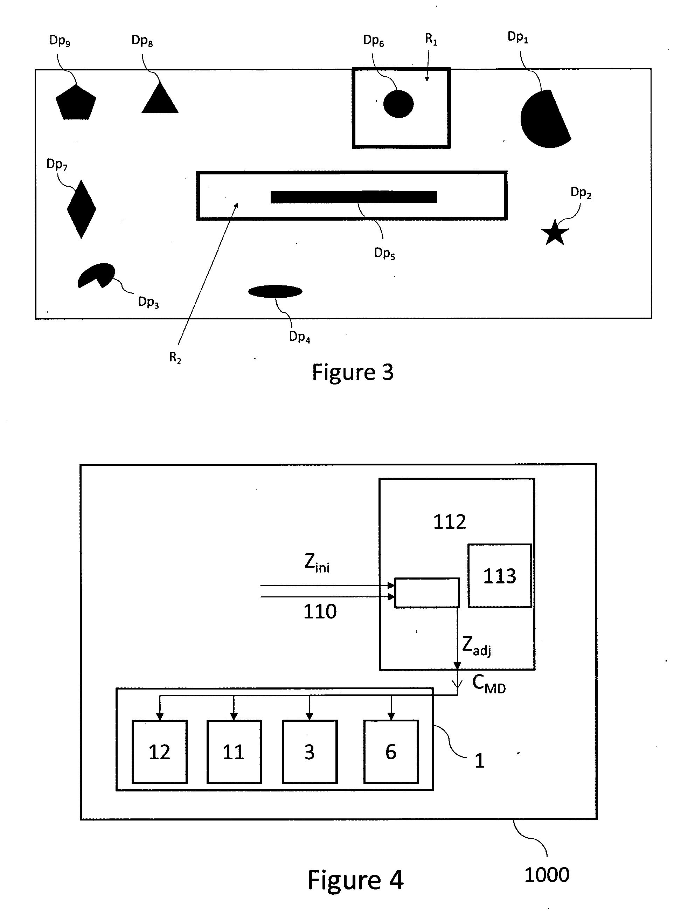

For example, a print quality score Sci and/or a print quality metric Pmi may characterize a print quality of a pattern or of a part of a pattern of the printed element 25. An example of a printed element 25 comprising a plurality of patterns is represented on figure 3. Such patterns are called "printed patterns Dp_{1,} ..., Dpₓ" in the present description.

A print quality score S_{ci} refers to an indicator of print quality in at least one area of the printed element 25 determined using information from said printed element, 25, or using information determined from a digitized representation of said printed element 25.

A print quality metric Pmi refers to an indicator of print quality in at least one area of the printed element 25 determined using information from said printed element 25 and using information from a reference, such as an element of reference or a digitized representation of an element of reference, for example a label of reference meeting expected criteria of print quality.

At least one print quality score S_{ci} and/or print quality metric Pmᵢ may comprise a value, a letter, or any other representation allowing to rate a print quality of the printed element 25.

At least one print quality score S_{Ci} and/or at least one print quality metric Pmi may be received through a communication interface from a local device. It should be understood by "a local device" a device part of the computer on which is performed the method 100, or a device connected through physical means to the computer. The local device may comprise a storage device, such as an internal or external memory, or any other storage device physically connected to the computer, or part of the computer.

In one embodiment, the reception of at least one print quality score S_{Ci} and/or at least one print quality metric Pmi comprises calculating at least one of said at least one one print quality score Sci and/or print quality metric Pmi. At least one print quality score S_{Ci} and/or print quality metric Pmi may be calculated locally, for example using a calculator connected to the computer or part of the computer on which is performed the method 100.

In addition, or alternatively, at least one print quality score S_{Ci} and/or at least one print quality metric Pmi may be calculated at least partially on a remote equipment. In such a case, the at least one print quality score Sci and/or at least one print quality metric Pmi may be received through the communication interface after being transmitted by the remote equipment. For example, the remote equipment and the computer may be connected to a server through a data network in order for the computer to receive data from the remote equipment. In addition, or alternatively, the remote equipment and the computer may be connected through a wireless link, for example via a Bluetooth connection, a wi-fi connection, a 4G or 5G connection, or via any other type of wireless connection adapted for data transmission/reception.

The remote equipment may comprise a user interface, for example a digital user interface.

One advantage is to allow for a user to send data remotely in a context of customer support. For example, if a customer encounters problems while printing with a printing apparatus, for example a thermal transfer printing apparatus or a printing apparatus adapted to perform printing without contact between the printhead and the ribbon, it would allow him to send data remotely, which could comprise data relative to the printing such as an image of the print, or data relative to the printing apparatus such as working parameters of the printing apparatus, or at least one print quality score S_{Ci} and/or print quality metric Pmi. Thus, in such a case, the method would allow to generate new working parameters for the printing apparatus, and therefore to provide customer assistance in a context of remote troubleshooting or remote calibration.

In one embodiment, at least one print quality score Sci and/or at least one print quality metric Pmᵢ is generated by means of a human machine interface. The human machine interface may comprise a pointing device, such as a computer mouse or a stylus, a keyboard, or any other device adapted for information entry from a user. The human machine interface may also comprise a touch screen.

At least one print quality score Sci and/or at least one print quality metric Pmᵢ may be generated using a user's input data. The user's input data may comprise values, such as values calculated using a element 25 printed by means of the printing apparatus 1. The user's input data may also comprise parameters, such as parameters of the printing apparatus 1, for example parameters characterizing a state of the printing apparatus 1 during printing operation of the printed element 25.

At least one print quality score Scᵢ and/or at least one print quality metric Pmᵢ generated by means of a human machine interface may be received by a calculator configured to perform the steps of the method 100 of the invention.

As a result, the invention allows to automatically generate adjusted working parameters Z_{adj} of a printing apparatus 1 using at least one print quality score Sci and/or at least one print quality metric Pmᵢ which can be calculated at least partially remotely and sent to the calculator configured to execute the steps of the method 100. At least one print quality score Sci and/or at least one print quality metric Pmᵢ may also be calculated using the calculator configured to perform the steps of the method 100 of the invention.

One advantage is to provide a method allowing to perform remote troubleshooting and/or remote calibrating on printing apparatuses, such as a thermal transfer printing apparatus or a printing apparatus adapted to perform printing without contact between the printhead and the ribbon.

### Digitized image

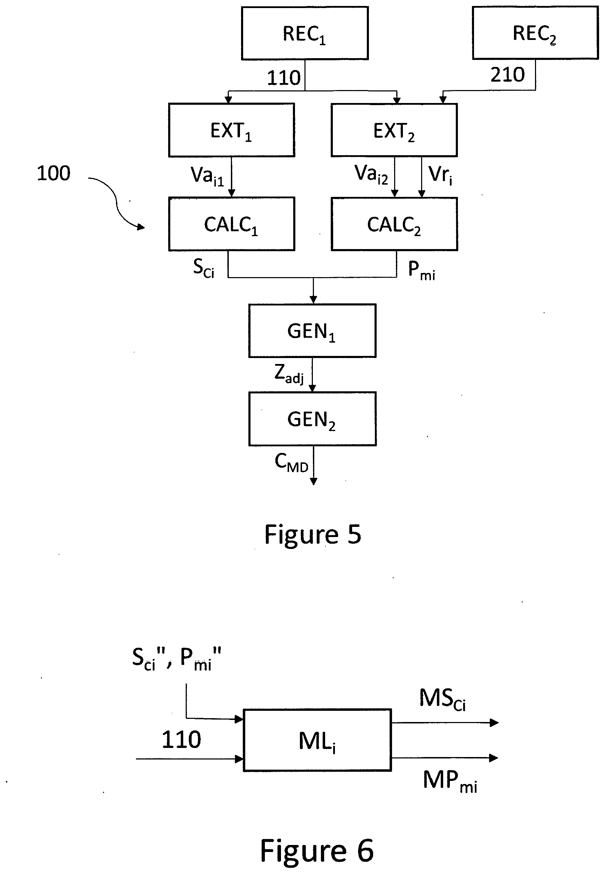

In one embodiment, in reference to figure 5, the method 100 comprises a step of receiving REC₁ a digitized image 110 of at least one printed element 25 by means of a first communication interface 111.

The digitized image 110 may be received REC₁ from an external device.

An "external device" refers to a device external to the computer on which are performed the step of the method of the invention.

The external device may comprise a digitizing apparatus, for example a scanner, such as a tabletop scanner.

The external device may be connected to the computer through the first communication interface 111 in such a way that the external device can transmit data to the computer, for example data comprising the digitized image 110 after a digitizing operation and/or data previously stored in a memory 113 of the external device.

The external device may comprise a scanning device, such as a high-resolution scanner, for example a scanner with a resolution equal to 2000 dots per inch, or higher.

The external device may also comprise any other type of scanning devices and/or any optical image acquiring devices, for example a high-resolution camera.

One advantage is to improve robustness in detection of features of the digitized image 110, such as patterns.

Another advantage is to obtain a digitized image 110 with optimal quality to improve precision of the quality assessment.

The external device may also comprise any other device comprising a memory 113 to store the digitized image 110.

The digitized image 110 may also be received REC₁ from the same device as the one on which is performed the method 100. For example, the digitized image 110 may be received through the communication interface 111 from a local memory 113 on which the digitized image 110 has been previously stored.

In one embodiment, the digitized image 110 is received through the communication interface 111 after being transmitted from a remote equipment,

In one embodiment, the method 100 comprises a step of automatically adjusting parameters of the external device. The parameters may be adjusted before digitizing the printed element 25. The adjusted parameters may comprise resolution, image type, image size, histogram adjustment, illumination adjustment.

In one embodiment, the method 100 comprises a step of saving the digitized image 110 in a memory 113.

In one embodiment, the method 100 comprises a step of converting the digitized image 110 from a first format to a second format. The format may comprise a tagged image file format image, or a multi tagged image format image.

In one embodiment, the method 100 comprises a step of automatically configuring the external device with an automatic scan mode. The configuration may comprise a predefined or configurable scan time inferior to a predefined threshold, for example ten seconds.

The communication interface 111 may be connected to the external device. The communication interface 111 may comprise a physical link, such as a cable to link the computer and the external device, or a wireless link such as a Bluetooth or Wi-Fi link allowing data exchange between the computer and the external device.

The communication interface 111 may also allow communication between components of the computer on which is performed the method 100.

For example, the communication interface 111 may allow data exchange with a memory 113 of the computer to load the digitized image 110 from said memory 113.

In one embodiment, the method 100 comprises a step of digitizing at least one physical support 150 on which is arranged at least one printed element 25.

The physical support 150 may comprise a thermal transfer image receiving sheet. An example of a such thermal transfer image receiving sheet comprise a paper sheet with an A4 format.

The receiving step REC₁ may comprise digitization of the physical support 150.

In one illustrative example, the digitized image 110 is received REC₁ during digitization of at least one printed element 25 arranged on a physical support 150 comprising a thermal transfer image receiving sheet on which are arranged said printed elements 25.

The printed elements 25 may also be digitized directly without using an additional physical support 150.

In one embodiment, the method comprises a step of receiving REC₁ a digitized image 110 of several printed elements 25.

The digitized image 110 may comprise digitized representations of the printed elements 25 arranged according to a predefined arrangement.

An example of predefined arrangement comprises a position of each digitized representations of the printed elements 25 relatively to each other.

Another example of predefined arrangement comprises a position of each printed element 25 relatively to edges of the digitized image 110.

In another example, the digitized image 110 comprises digitized printed elements 25 arranged in such a way that a center of each digitized printed element 25 is part of a same segment parallel to an edge of the digitized image 110. In this example, the edge of the digitized image 110 may correspond to a digitized representation of an edge of the physical support 150.

In one embodiment, the method 100 comprises a step of converting at least one printed element 25 into the digitized image 110 using a position of reference.

The position of reference may be determined using a position of at least one portion of a pattern of reference. Such portion may comprise at least one elementary unit of the pattern of reference.

The pattern of reference may comprise a digitized pattern Dp_{1, ...,} Dpₙ corresponding to a digital representation of a pattern of the printed element 25.

One example of a pattern of reference is a black bar. For example, an edge of the black bar may be used as a reference point to position a printed element 25.

Alternatively, or in addition, any other digitized pattern Dp_{1, ...,} Dpₙ may be used as a pattern of reference.

In one embodiment, the method 100 comprises a step of extracting a plurality of image features If₁, ..., Ifₙ from the digitized image 110. The plurality of image features If₁, ..., Ifₙ may comprise coordinates xₐ, yₐ of at least one region of interest Ri₁, ..., Riₙ of the digitized image 110. At least one region of interest Ri₁, ..., Riₙ may comprise at least one digitized pattern Dp_{1, ...,} Dp_{n.}

In one embodiment, at least one printed element 25 is converted into the digitized image 110 according to a guided position.

For example, an alignment guide may be printed on the physical support 150 before digitization to ensure that the printed elements 25 are arranged at a predefined desired position.

In one embodiment, the method comprises a step of resizing and/or cropping the digitized image 110.

For example, the digitized image 110 may be cropped in order to isolate one printed element 25 from a plurality of printed elements 25.

In another example, the digitized image 110 may be cropped in order to isolate at least one digitized pattern Dp_{1, ...,} Dpₙ of a given printed element 25, or at least one portion of at least one digitized pattern Dp_{1, ...,} Dpₙ of at least one printed element 25. Such portion may comprise at least one elementary unit of the digitized pattern Dp_{1, ...,} Dp_{n.}

One advantage is to reduce the amount of information in the digitized image 110 in order to reduce further image processing operations.

Another advantage is to improve the efficiency of further image processing operations.

Another advantage is to allow focusing on further processing operations or on one or several specific portions of the digitized image 110.

In one embodiment, the method comprises a step of associating at least one digitized representation of at least one printed element 25 of the digitized image 110 with an identifier. The identifier allows to identify a specific printed element 25 among a plurality of printed elements 25.

The identifier may comprise numbers, letters, or any other form of information allowing to distinguish the printed elements 25.

For example, in a case where the digitized image 110 comprises four digitized representations of four printed elements 25, the identifier of the second printed element 25 from the top of the digitized image 110 may be 2/4. The identifier may also comprise a numbering of the physical support 150 among a plurality of supports, such as a number of the digitized image 110 among a plurality of digitized images. For example, among a set often digitized images 110, four elements may be arranged on each image. The identifier may comprise the number of the digitized image 110, for example 1/10, as well as the number of the printed element 25, for example 2/4.

In one embodiment, the digitized image 110 comprises an image negative of at least one portion of an endless ribbon 5 of the printing apparatus 1. It should be understood as "an image negative" an image representative of a coated side of the endless ribbon 5 after printing. The image negative may represent a resulting coating state of the endless ribbon 5 after printing. Such representation of a resulting coating state of the endless ribbon 5 may comprise representations of a remaining ink arrangement on the surface of the ribbon and/or representations of a remaining ink quantity on the surface of the ribbon after printing operations. Thus, the image negative may be processed to determine the adjusted working parameters Z_{adj} of the printing apparatus 1.

The image negative may be obtained by performing a set of mathematical operations on the digitized image 110 of the printed element 25.

In one embodiment, the image negative is obtained using an optical detection device. The optical detection device may be arranged in such a way that it can acquire an image of a remaining coated portion of the endless ribbon 5 after printing operation, and before said endless ribbon 5 is recoated for a new printing cycle.

### Digitized patterns

In one embodiment, the received REC₁ digitized image 110 comprises a plurality of digitized patterns Dp_{1, ...,} Dpₙ. The digitized patterns Dp_{1, ...,} Dpₙ may comprise digital representations of printed patterns of the printed element 25.

Each digitized pattern Dp_{1, ...,} Dpₙ may comprise pattern features. The pattern features may comprise a geometrical shape such as vertical or horizontal lines, bars, circles, for example concentric circles, characters, such as numbers or letters, a specific combination of elements, such as a combination of letters and/or numbers, dimensions such as one or several lengths, a specific geometrical arrangement of elements, such as parallel bars or concentric circles, a specific sequence such as bars with increasing width from left to right or inversely, a position of the pattern relatively to a reference, such as a pattern or reference or a portion of a pattern used as a reference point, or any combination of the precited features.

In one embodiment, at least one digitized pattern Dp_{1, ...,} Dpₙ comprises lines with a thickness comprised between 0.1mm and 0.5mm.

In one embodiment, at least one digitized pattern Dp_{1, ...,} Dpₙ comprises concentric circles with thickness comprised between 0.1mm and 0.5mm.

In one embodiment, at least one digitized pattern Dp_{1, ...,} Dpₙ comprises a white area. The white area may correspond to a gap between two printed elements of a pattern, for example a white gap between two parallel vertical bars.

In one embodiment, at least one digitized pattern Dp_{1, ...,} Dpₙ comprises a barcode comprising encoded information. The encoded information may comprise parameters of a printing apparatus 1.

In addition, or alternatively, at least one digitized pattern Dp_{1, ...,} Dpₙ may comprise a barcode encoding information relative to the printed element 25 and/or parameters relative to an inked ribbon used to print the printed element 25.

In one embodiment, at least one digitized pattern 2500 comprises a bar gap repetition pattern arranged in horizontal and vertical directions.

Figure 3 illustrates an example of a digitized image 110 comprising a plurality of digitized patterns Dp_{1, ...,} Dp₉.

The digitized patterns Dp₁, ..., Dpₙ may comprise several shapes of patterns, such as parallel bars of same length and variable width, concentric circles, full black bar, sequence of letters, parallel bars of same length forming a rectangle, horizontal barcode, siemens star shape, parallel bars of same length forming a square, vertical barcode.

The preceding list is not exhaustive and only aims at giving examples of digitized printed patterns that the digitized image 110 may comprise.

Figure 3 illustrates an example of a digitized image 110 comprising a plurality of digitized patterns Dp_{1, ...,} Dp₉.

In one embodiment, the method 100 comprises a step of labelling a plurality of digitized patterns Dp_{1, ...,} Dpₙ. The labelling step may allow to classify the digitized patterns Dp_{1, ...,} Dpₙ through several categories.

The labelling step may be performed using pattern features. For example, the labelling step may be performed by calculating a probability score of detection of each pattern feature for each digitized pattern Dp_{1, ...,} Dpₙ and comparing the probability scores to a threshold value to confirm or infirm the detection of the features. A step of classification may be performed using the result of the comparison of the probability scores to a threshold value.

In addition, or alternatively, the digitized patterns Dp_{1, ...,} Dpₙ may be labelled depending on a print quality parameter. The print quality parameter may comprise a value characteristic of the print quality and/or a value characteristic of a gap between a reference value.

In one embodiment, the digitized image 110 comprises at least one digitized pattern Dp_{1, ..,} Dpₙ encoding an identifier of the printed element 25.

In one embodiment, the digitized image 110 comprises at least one digitized pattern 2500 encoding an identifier of the printing apparatus 1 used to print a printed element 25.

### Digitized image: regions of interest

The digitized image 110 may comprise a plurality of regions of interest Ri₁, _{...}, Riₙ. The regions of interest Ri₁, _{...}, Riₙ can be defined as portions of the digitized image 110 comprising usable information.

The digitized patterns Dp_{1, ...,} Dpₙ of the printed element 25 may be distributed in the plurality of regions of interest Ri₁, _{...}, Riₙ.

At least one region of interest Ri₁, _{...}, Riₙ may comprise one or several digitized patterns Dp_{1, ...,} Dpₙ.

In addition, or alternatively, at least one region of interest Ri₁, _{...}, Riₙ may comprise at least one portion of at least one digitized pattern Dp₁, _{...}, Dpₙ.

In one embodiment, at least one region of interest Ri₁, _{...}, Riₙ comprises at least one digitized pattern Dp_{1, ...,} Dpₙ.

In one embodiment, each region of interest Ri₁, _{...}, Riₙ comprises at least one digitized pattern Dp_{1, ...,} Dpₙ.

In one embodiment, at least one region of interest Ri₁, _{...}, Riₙ comprises a plurality of digitized patterns Dp_{1, ..,} Dpₙ.

In one embodiment, each region of interest Ri₁, _{...}, Riₙ comprises a plurality of digitized patterns Dp_{1, ...,} Dpₙ.

In one embodiment, at least one region of interest Ri₁, _{...}, Riₙ comprises a digitized pattern Dp_{1, ...,} Dpₙ belonging to at least one other region of interest Ri₁, _{...}, Riₙ, or a portion of said digitized pattern Dp_{1, ...,} Dpₙ.

In one embodiment, at least one region of interest Ri₁, _{...}, Riₙ comprises a printed area that does not belong to a digitized pattern Dp_{1, ...,} Dpₙ. Such printed area may be related to a defect. Such printed area may result from a printing error.

In one embodiment, at least one region of interest Ri₁, _{...}, Riₙ comprises a non-printed area. A non-printed area at a specific location may be considered as useful information, for example if printing was expected in the non-printed area. For example, if the coordinates of the non-printed area are located in a pattern area or nearby, the non-printed area may be considered as a printing defect.

In one embodiment, the method comprises a step of isolating at least one region of interest Ri₁, _{...}, Riₙ from the plurality of regions of interest Ri₁, _{...}, Riₙ.

In addition, or alternatively, at least one region of interest Ri₁, _{...}, Riₙ may comprise a non-printed area. For example, the absence of printing in a given area, or at a given position of the digitized image 110 may be considered as usable information.

In one embodiment, the method comprises a step of isolating at least one region of interest Ri₁, _{...}, Riₙ.

One advantage is to process information from a specific portion of the digitized image 110.

At least one region of interest Ri₁, _{...}, Riₙ may be isolated by selecting an area of the digitized image 110. For example, a user may select manually a region of interest Ri₁, _{...}, Riₙ in the digitized image 110, for example using a user interface, such as a digital screen, or a pointing device connected to the computer, such as a mouse.

In addition, or alternatively, at least one region of interest Ri₁, _{...}, Riₙ may be isolated using a searching algorithm.

The searching algorithm may be configured to detect specific features in the digitized image 110, such as shapes, for example rectangular contours.

The method 100 may comprise a step of receiving input data of the searching algorithm. The input data may comprise features characteristics of at least one digitized pattern such as dimensions, for example a size of a digitized pattern Dp_{1, ...,} Dpₙ. In addition, or alternatively, at least one input data of the searching algorithm may be calculated by extracting features from the digitized image 110.

The input data of the searching algorithm may comprise a constraint. The searching algorithm may be configured to automatically filter features of the digitized image 110 that do not match the constraint. For example, the input data may comprise a size of a specific pattern, such as the size of a black bar, and the searching algorithm may be configured to detect rectangular contours in the digitized image 110. In that example, the input data allow the algorithm to filter the rectangular contours which do not match the constraint required by the input data.

In one embodiment, the method comprises a step of associating coordinates to at least one position in the digitized image 110. The coordinates may be associated with a portion of a digitized pattern Dp_{1, ...,} Dpₙ, for example a portion of a digitized pattern Dp_{1, ...,} Dpₙ comprised in a region of interest Ri₁, _{...}, Riₙ isolated using the searching algorithm, such as a corner of a black bar. The associated coordinates may comprise coordinates in a coordinate system, such as an orthonormal coordinate system defined by a length direction and a width direction of the digitized image 110. The associated coordinates may comprise origin coordinates in the coordinate system, such as (0,0).

In one embodiment, the digitized image 110 may be processed using an image processing algorithm. The image processing algorithm may be automatically performed. The image processing algorithm may be performed previous to isolating at least one region of interest Ri₁, _{...}, Riₙ. The processing algorithm may be configured to perform one or several steps among the following: down sampling the digitized image 110, binarize the digitized image 110.

In one embodiment, the method comprises a step of isolating at least one region of interest Ri₁, _{...}, Riₙ in the digitized image 110 using the coordinates associated to at least one position in the digitized image 110. For example, when origin coordinates (0,0) are associated with a given position in the digitized image 110, those coordinates may be used as a reference to determine one or several coordinates located in at least one other region of interest Ri₁, _{...}, Riₙ.

One advantage is to improve accuracy of the coordinates assignment by allowing an alternative to the use of a searching algorithm for each region of interest Ri₁, _{...}, Riₙ.

In one embodiment, the step of isolating Ri₁, _{...}, Riₙ at least one region of interest Ri₁, _{...}, Riₙ in the digitized image 110 comprises extracting said region of interest Ri₁, _{...}, Riₙ in the digitized image 110.

In one embodiment, the step of isolating ISO at least one region of interest Ri₁, _{...}, Riₙ in the digitized image 110 comprises selecting said region of interest Ri₁, ..., Riₙ in the digitized image 110.

### Digitized image: calculation of the value of interest

The method 100 may comprise a step of extracting EXT₁ at least one first value of interest Vaᵢ₁ from at least one region of interest among the plurality of regions of interest Ri₁, ., Riₙ.

In one embodiment, the method 100 comprises a step of extracting EXT₂ at least one second value of interest Vaᵢ₂ distinct from the first value of interest Vaᵢ₁ from at least one region of interest among the plurality of regions of interest Ri₁, _{...}, Ri_{n.}

We distinguish the first value of interest Vaᵢ₁ from the second value of interest Vaᵢ₂ as when a "print quality score" is calculated, at least two different values of interest extracted from the digitized image 110 may be used.

The first value of interest Vaᵢ₁ and/or the second value of interest Vaᵢ₂ may comprise a value characteristic of an element located in a region of interest Ri₁, _{...}, Riₙ. The element may comprise a printed element, such as a digitized pattern Dp_{1, ...,} Dpₙ or a part of a digitized pattern Dp_{1, ...,} Dpₙ. The element may also comprise a non-printed element, such as a white gap between several printed areas, or a non-printed area.

The first value of interest Vaᵢ₁ and/or the second value of interest Vaᵢ₂ may comprise a dimension. The dimension may be relative to a position of a digitized representation of at least one printed element 25 on the digitized image 110. The dimension may depend on a position of at least one digitized printed element 25 relatively to at least one another digitized representation of at least one other printed element 25 on the digitized image 110.The dimension may comprise a length, a width, a height, or an area. Examples of a first value of interest Vaᵢ₁ comprising a dimension comprise a length of a printed edge in a region of interest Ri₁, _{...}, Riₙ, a shore area or a border of an element in a region of interest Ri₁, ., Riₙ, an area of pinholes in an element in a region of interest Ri₁, ..., Riₙ smaller than a given dimension, an area of defects in an element in a region of interest Ri₁, _{...}, Riₙ smaller than a given dimension, an ink coverage in a region of interest Ri₁, _{...}, Riₙ.

In addition, or alternatively, the first value of interest Vaᵢ₁ and/or the second value of interest Vaᵢ₂ may comprise a resolution, such as a pixel intensity or a linear print resolution. Examples of values of interest Vaᵢ relative to a resolution comprise a pixel intensity in a digitized pattern Dp_{1, ...,} Dpₙ, a difference of pixel intensity between a printed area and a non-printed area of the digitized image 110.

In one embodiment, the first value of interest Vaᵢ₁ and/or the second value of interest Vaᵢ₂ comprise an average value. An example of a value of interest Vai comprising an average value comprises an average pixel intensity, for example along a predefined direction, for example a vertical direction.

In one embodiment, the first value of interest Vaᵢ₁ and/or the second value of interest Vaᵢ₂ comprise a number of elements. For example, the first value of interest Vaᵢ₁ and/or the second value of interest Vaᵢ₂ may comprise a number of pixels, such as a number of black pixels or a number of white pixels in a given region of interest Ri₁, _{...}, Riₙ.

In one embodiment, the first value of interest Vaᵢ₁ and/or the second value of interest Vaᵢ₂ comprise a magnitude, for example the magnitude relative to the power spectral density at a given position in a printed area.

In one embodiment, the first value of interest Vaᵢ₁ and/or the second value of interest Vaᵢ₂ are calculated using at least one feature extracted from at least one region of interest Ri₁, _{...}, Riₙ. The feature may comprise a dimension of an element and/or a resolution and/or an average value and/or a number of elements and/or a magnitude.

In one embodiment, the step of extracting the first value of interest Vaᵢ₁ and/or the second value of interest Vaᵢ₂ comprise preprocessing at least one isolated region of interest Ri₁, _{...}, Riₙ. The preprocessing may be performed using an image processing algorithm.

Examples of preprocessing comprise binarization, application of a filter such as an edge filter, morphological operations such as returning all structures larger than an operator of a predefined size, using a Boolean operator such as an" and" operator, a thresholding operation, a computing operation such as computing a power spectral density of an element, using a peak detection algorithm, resizing operations, dividing operations such as dividing a region of interest Ri₁, _{...}, Riₙ. into several parts.

### Reference image: calculation of reference value

In one embodiment, the method 100 comprises a step of receiving REC₂ a reference image 210 comprising a plurality of reference patterns Dp_{ref1}, _{...,} Dp_{refn} distributed in a plurality of reference regions of interest Ri_{ref1, ...,} Ri_{refn}.

In one embodiment, the reference image 210 comprises a reference pattern with a higher resolution than a digitized pattern Dp_{1, ...,} Dpₙ located in a region of interest Ri_{1, ..,} Riₙ of the digitized image 110.

In one embodiment, the reference image 210 comprises a vectorial version of a reference pattern.

In one embodiment, the method comprises 100 a step of replacing at least one reference pattern with its vectorial version. This step may be performed using a vector graphics editor.

In one embodiment, the method comprises a step of calculating a value of reference Vrᵢ. The value of reference Vᵣᵢ may be calculated using the reference image 210. The value of reference Vrᵢ may be calculated using an element of the reference image 210, such as a printed element or a non-printed element such as a white gap between several printed areas, or a non-printed area.

The value of reference Vrᵢ may comprise a dimension. The dimension may comprise a length, a width, a height, or an area. Examples of values of reference Vrᵢ comprising a dimension comprise a length of a reference edge, a shore area of a reference element, a total area of an element such as a total area of a black bar, a total white gap area in the reference image 210, a reference ink coverage in the reference image 210, a height of an element in the reference image 210.

In addition, or alternatively, the value of reference Vn may comprise a resolution, such as a pixel intensity or a linear print resolution.

In one embodiment, the value of reference Vrᵢ comprises an average value.

In one embodiment, the value of reference Vrᵢ comprises a number of elements, for example a number of pixels, such as a number of blacks pixels or a number of white pixels in a given area of the reference image 210.

In one embodiment, the value of reference Vr comprises a magnitude, for example the magnitude relative to the power spectral density at a given position in a printed area in the reference image 210.

### Calculation of print quality indicators: metrics and scores

In one embodiment, the method 100 comprises a step of calculating CLC₁ at least one print quality score Sci using the first value of interest Vaᵢ₁ and using the second value of interest Vaᵢ₂ by means of at least one calculator 112.

Examples of print quality scores Sci comprise a rotation angle, a pinholes area percentage, a defect area percentage, a contrast, an average blackness, an average peak intensity, a periodicity, a text readability, a resolution such as a linear resolution or a siemens star resolution.

In one embodiment, at least one print quality score S_{Ci} is calculated CLC₁ by calculating a ratio between the first value of interest Vaᵢ₁ and the second value of interest Vaᵢ₂. For example, at least one print quality score Sci may be calculated by dividing a number of black pixels in a region of interest Ri_{1, ...,} Riₙ by a sum of said number of black pixels and of the white pixels in the same region of interest Ri_{1, ...,} Riₙ.

In one embodiment, the method 100 comprising a step of calculating CLC₂ at least one print quality metric Pmᵢ using the first value of interest Vaᵢ₁ and using at least one value of reference Vrᵢ by means of at least one calculator 112.

Example of print quality metrics Pmᵢ comprise a line length ratio, a shore area ratio, a coverage ratio, a height scaling.

At least one print quality score Sci and/or at least one print quality metric Pmᵢ may be automatically calculated using an algorithm, such as an image processing algorithm applied to the digitized image 110, and/or applied to the reference image 210, and/ or applied to one or several specific regions of interest of the digitized image 110 or the reference image 210.

In one embodiment, at least one print quality metric Pmᵢ and/or at least one print quality score Sci is automatically calculated using at least one predefined rule. Different predefined rules may be implemented for calculating different each print quality score S_{Ci} and/or each print quality metric Pmᵢ.

At least one predefined rule may comprise mathematical operations such as calculating a sum, a difference, a product, or a ratio, or using a mathematical function, such as a function which returns an area under curve.

At least one predefined rule may comprise a combination of mathematical operations using one or several values of interest V_{Ai}, such as the first value of interest Vaᵢ₁ and the second value of interest Vaᵢ₂, and/or one or several values of reference V_{Ri}.

In one embodiment, at least one print quality metric Pmᵢ is calculated CLC₂ by calculating a ratio between a value of interest Vₐᵢ and a value of reference Vn.

Examples of such ratio comprise a ratio between a dimension of a print feature and a dimension of a reference feature, such as a ratio between a length of a printed edge and a length of a reference edge, or such as a ratio between a height in the digitized image 110 and a height in the image of reference 210, a ratio between a specific area of a printed feature and a corresponding specific area of a reference feature, such as a ratio between shore areas or such as a ratio between ink coverage, a ratio between a specific area of a printed feature and a different specific area of a reference feature, such as a ratio between an area of pinholes smaller than a given size and a total area of a given pattern or a total area of a gap.

In one embodiment, at least one print quality score Scᵢ is calculated CLC₁ by calculating a ratio using at least one value of interest Vai.

Examples of such ratio comprise calculating a ratio between one value of interest Vaᵢ and an integer. For example, a print quality score for quantifying how well gaps of the linear resolution targets are resolved may be calculated with value of interest V_{Ai} comprising a number of peaks calculated by applying a peak detection algorithm on an average profile of pixel intensities along a horizontal direction, wherein each peak corresponds to a line gap. This value of interest V_{Ai} may be divided by an integer, for example a number of expected gaps.

In another example, a text readability of a digitized pattern Dp_{1, ...,} Dpₙ may be calculated using an algorithm returning and area under curve relative to an evolution of a ratio between an integer and a number of connected elements for varying thresholds.

The method may comprise a step of storing algorithm parameters in a file. The algorithm parameters may be stored in a file together with parameters of the digitized image 110, such as coordinates of the regions of interest Ri_{1, ...,} Riₙ. The algorithm parameters and the parameters of the digitized image 110 may be loaded upon a framework launch, such as a python framework. Those parameters may be loaded together with the reference image 210 or parameters relative to said reference image 210.

In one embodiment, the method comprises a step of extracting metadata from the digitized image 110. The metadata may be extracted by decoding a digitized pattern Dp_{1, ...,} Dpₙ, such as a barcode. The metadata may be extracted using a decoding algorithm. The metadata may comprise parameters related to the printing apparatus, parameters related to the printed element 25 and/or parameters related to an inked ribbon of the printing apparatus.

In one embodiment, the calculated print quality scores S_{Ci} and/or the calculated print quality metrics Pmᵢ are automatically stored in a file, for example a .csv file.

In one embodiment, the method 100 comprises a step of calculating CALC₃ a global print quality indicator GPki. The global print quality indicator GPkᵢ may correspond to a single printing assessment of the printed element 25. The global print quality indicator GPki may comprise a number indicating a print quality according to a predefined scale of rating. The global print quality indicator GPki is for example calculated by performing at least one predefined rule. The global print quality indicator GPki is for example calculated using the a plurality of print quality scores Sci and/or a plurality of print quality metrics Pmᵢ.

### Artificial intelligence

In one embodiment, the method comprises a step of automatically generating at least one predicted print quality score MScᵢ and/or at least one predicted print quality metric MPmᵢ by means of a machine learning algorithm MLi using at least one digitized image 110 as input data of said machine learning algorithm MLi.

The predicted print quality score MSci and/or the predicted print quality metric MPmi may be generated by the machine learning algorithm MLi using a plurality of print quality scores SCi and/or using a plurality of print quality metrics Pmi.

In one embodiment, at least one predicted print quality indicator ML_{Pki} may be calculated using at least one predicted print quality score MSci and/or at least one predicted print quality metric MPmi.

The predicted print quality indicator ML_{Pki} may correspond to an expected human rating of the print quality of the printed element 25. For example, the predicted print quality indicator ML_{Pki} may correspond to an expected human rating of the print quality of the printed element 25 based on the plurality of print quality scores SCi and/or using a plurality of print quality metrics Pmi.

In one embodiment, the machine learning algorithm MLi comprises a classifier. The machine learning algorithm MLi may perform a classification of an input image, such as the digitized image 110, based on a plurality of print quality scores Sci and/or a plurality of print quality metrics Pₘᵢ. For example, the classifier may comprise several classes and the class in which the printed element 25 is classified may depend on a plurality of print quality scores S_{Ci} and/or a plurality of print quality metrics Pₘᵢ. The classes may correspond to a plurality of predicted print quality indicator ML_{Pki}. Each class may correspond to a printing quality, for example an insufficient quality or a perfect quality.

In one embodiment, the machine learning algorithm MLi is configured to assign a predicted print quality indicator MLPki to at least one input digitized image 110. The machine learning algorithm MLi may be configured to automatically perform this step by performing a set of predefined rules.

One advantage is to automatically classify the digitized image 110 according to its print quality.

In one embodiment, the machin learning algorithm MLi comprise or is configured to implement a trained learning function.

In one embodiment, the machine learning algorithm MLi is trained using a training dataset comprising a plurality of labeled data.

The set of predefined rules may be determined based on a training of said machine learning algorithm MLi using the training dataset.

The training dataset may comprise a plurality of training digitized image 110". The training dataset may also comprise a plurality of training print quality scores Sci" and/or a plurality of training print quality metrics Pmᵢ". Each training print quality score Scᵢ" and each training print quality metrics Pmᵢ may be associated with one single training digitized image 110". The plurality of training digitized image 110" may be labelled according to an expected human rating of the print quality of the training digitized image 110".

One advantage is to train the machine learning algorithm to learn how the print quality scores and metrics can be weighted and combined to predict a correct subjective rating corresponding to an expected human rating.

In one embodiment, the method comprises a step of calculating a plurality of training print quality scores Scᵢ" and/or a plurality of training print quality metrics Pmᵢ" for each training printed element 25".

The method may comprise a step of receiving a training digitized image 110" of a training printed element 25".

The method may comprise a step of isolating at least one training region of interest in the training digitized image 110".

The method may comprise a step of extracting at least one training value of interest Vaᵢ" associated with an isolated training region of interest.

The method may comprise a step of calculating a plurality of training print quality scores Scᵢ" and/or a plurality of training print quality metrics Pmᵢ" a plurality of training print quality indicators Pki" by performing a set of predefined rules.

The set of predefined rules may comprise calculating at least one print quality metric Pmi" using at least one training value of interest Vai' and using at least one training value of reference Vri" calculated using a training reference image 210".

The method 100 may comprise calculating at least one training print quality score Scᵢ" using at least one training value of interest Vaᵢ".

The machine learning algorithm MLᵢ may comprise a supervised method or an unsupervised method.

The machine learning algorithm MLᵢ may comprise using a neural network such as a convolutional neural network or a recurrent neural network. The neural network may comprise several layers among the following: convolutional layers, pooling layers, dropout layers, fully connected layers also known as dense layers, SoftMax layers, output layers.

The machine learning algorithm MLi may also comprise a model based on a random forest method.

The machine learning algorithm MLi may also comprise a deep learning method.

### Working parameters

The method 100 may comprise a step of receiving current working parameters Zᵢₙᵢ of the printing apparatus 1.

In one embodiment, the current working parameters Zᵢₙᵢ comprise a parameter relative to at least one element configured to contribute to supporting or transporting an endless ribbon 5 of the printing apparatus 1.

An example of such parameter comprises a speed of at least one roller of the printing apparatus 1.

In one embodiment, the current working parameters Zᵢₙᵢ comprise a parameter relative to a coating composition coated on the surface of the endless ribbon 5. An example of such parameter comprises a thickness of the coating composition.

In one embodiment, the current working parameters Zᵢₙᵢ comprise a parameter relative to a printhead of the printing apparatus 1.

In one embodiment, the current working parameters Zᵢₙᵢ comprise a parameter relative to a cooling device of the printing apparatus 1.

An example of such parameter comprises a target temperature of a cooling device, for example arranged to cool down a coated layer between a coating module of the printing apparatus 1 and a printing zone of the printing apparatus 1.

The method 100 comprises a step of generating GEN₁ adjusted working parameters Z_{adj} of the printing apparatus 1.

The adjusted working parameters Z_{adj} are generated using at least one print quality score Sci and/or at least one print quality metric Pmᵢ.

The adjusted working parameters Z_{adj} may be generated using the current working parameters Zᵢₙᵢ of the printing apparatus 1. For example, the method 100 may comprise a step of applying an algorithm receiving input data comprising at least one print quality score Sci and/or at least one print quality metric Pmᵢ and the current working parameters Zᵢₙᵢ. The algorithm may be configured to perform a set of predefined rules to generate the adjusted working parameters Z_{adj} of the printing apparatus 1 using the input data.

The adjusted working parameters Z_{adj} may comprise at least one parameter among the following: a parameter relative to at least one element configured to contribute to supporting or transporting an endless ribbon 5 of the printing apparatus 1 such as a speed of at least one roller, a parameter relative to a coating composition coated on the surface of the endless ribbon 5, a parameter relative to a printhead of the printing apparatus 1, a parameter relative to a cooling device of the printing apparatus 1, such as a target temperature value.

More generally, the initial working parameters Zᵢₙᵢ and the adjusted working parameters Z_{adj} can comprise any parameter of the printing apparatus 1 which may affect a printing quality of the printed element 25.

Optionally, the method 100 comprises a step of automatically generating a command signal C_{md} using the generated adjusted working parameters Z_{adj}.

Optionally, the command signal C_{md} is transmitted to the printing apparatus 1 by means of a communication interface.

### System

According to another aspect, the invention relates to a system 1000 comprising at least one calculator 112 and at least one communication interface 111 configured to execute the steps of the method to the first aspect of the invention.

In one embodiment, the system 1000 comprises the printing apparatus 1.

In one embodiment, the system 1000 comprises at least one optical detection device 26 and is configured to execute the step of the method for automatically adjusting the initial working parameters Zᵢₙᵢ of the printing apparatus 1.

A non-restrictive example of a printing apparatus 1 of the system 1000 is described from page 9 ligne.1 to page 25 l.3 of patent application for which the international publication number is WO2022/12895. The description from page 9 ligne.1 to page 25 l.3 of said patent application is incorporated hereby by reference in the present detailed description.

According to another aspect, the invention relates to a computer program product comprising instructions to cause the system to execute the steps of the method according to the first aspect of the invention.

According to another aspect, the invention relates to a computer readable medium MEM having stored thereon the computer program.

### Hardware configuration

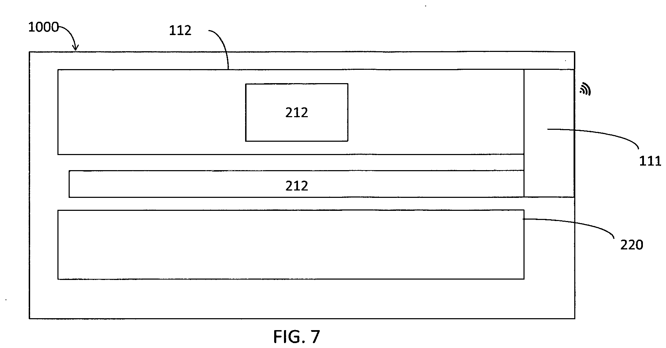

Figure 7 illustrates an example of hardware configuration of the system 1000 of the invention.

The system 1000 can be seen as a calculator interacting with a computer program.

The system 1000 comprises a calculator 112. The calculator 112 comprises, for example, one or several processors adapted to interpret instructions in the form of computer programs. The processing may be executed by one processor sequentially or simultaneously, or according to another method, by one or several processors.

The calculator 112 may comprise a data processing module to perform calculations, a memory 212 connected to the data processing module, a computer readable medium and optionally a reader adapted to read the computer readable medium.

The system 1000 may comprise an input module, an output module, and a communication interface 111.

Each function of the system 1000 may be executed by making the data processing module to read a predetermined program on a material such as the memory 212, so that the data processing module executes calculations, commands communications to the communication interface and commands reading or writing data in the memory 212 and in the computer readable medium.

The method may be executed on one computer or on a distributed system between several computers (for example cloud computing).

The memory 212 is a computer readable storing medium and may be configured with, for example, a random-access memory or any other storage medium that would be adequate. The memory 212 may comprise an operating system to load the program of the invention. The memory 212 may comprise means for storing parameters variables created and modified during the execution of the precited program.

The instructions of the program may be stored on a computer readable storing support comprising, for example, a removable support, such as for example, and not limited to, a compact disc read only memory, a removable disc, a database, a server, or any other adapted storage support.

The instructions of the program may also come from an external source and be downloaded through a network. In that case, the program may comprise a computer readable data support on which are stored the instructions of the program or a data support on which are encoded the instructions of the program.

The system 1000 may comprise a user interface 220 comprising an input device and an output device.

The input device comprises for example a keyboard and a pointing interface such as a mouse.

The output device is adapted to return information to a user, electrically or sensory, for example visually or sonorously. The output device comprises for example a graphical user interface. The output interface may comprise the input device, for example in the case of a tablet.

The set of at least one communication interface allows communication between elements of the system 1000 and optionally between at least one element of the system 1000 and one element external to the system 1000. The set of at least one communication interface may establish a physical link or a wireless link between elements of the system 1000 and/or between at least one element of the system 1000 and at least one device external to the system 1000.

## Claims

1. A computer implemented method (100) for automatically generating (GEN₁) working parameters of a printing apparatus (1) comprising a coating module (7), an endless ribbon (5) and an ink rejuvenation device, the method (100) comprising:
• Receiving at least one print quality score (Sci) and/or at least one print quality metric (Pmᵢ), said print quality score (S_{ci}) and said print quality metric (Pmᵢ) characterizing a print quality of a printed element (25) printed by means of the printing apparatus (1);
• Automatically generating (GEN₁) adjusted working parameters (Z_{adj}) of the printing apparatus (1) using said at least one print quality score (Pmᵢ) and/or using said at least one print quality metric (Pmᵢ).

2. The method (100) according to claim 1, wherein at least one print quality score (Sci) and/or at least one print quality metric (Pmᵢ) is generated using a human machine interface.

3. The method (100) according to any of claims 1 to 2, wherein at least one print quality score (S_{Ci}) and/or at least one print quality metric (Pmᵢ) is calculated by processing a digitized image (110) of the printed element (25).

4. The method (100) according to claim 3, wherein at least one print quality metric (Pmᵢ) is calculated by processing the digitized image (110) of the printed element (25) and by processing a reference image (210) of a printed element (25).

5. The method (100) according to any of claims 1 to 4, comprising:
• Receiving (REC₁) a digitized image (110) of at least one printed element (25) by means of a first communication interface (111), said digitized image (110) comprising a plurality of digitized patterns (Dp_{1, ...,} Dpₙ) distributed in a plurality of regions of interest (Ri₁, _{...}, Riₙ) ;
• Performing the following steps by means of at least one calculator (112):
▪ Extracting (EXT₁) at least one first value of interest (Vaᵢ₁) from at least one region of interest among the plurality of regions of interest (Ri₁, _{...}, Riₙ);
▪ Calculating at least one print quality score (Sci) and/or calculating at least one print quality metric (Pmᵢ) by respectively:
- Extracting (EXT₂) at least one second value of interest (Vai₂) distinct of the first value of interest (Vai₁) and calculating (CLC₁) said print quality score (Sci) using the first value of interest (Vaᵢ₁) and using the second value of interest (Vai₂) and/or;
- Calculating (CLC₂) said print quality metric (Pmᵢ) using the first value of interest (Vaᵢ₁) and using at least one value of reference (Vᵣᵢ);

6. The method (100) according to claim 5, comprising:
• Receiving (REC₂) a reference image (210) comprising a plurality of reference patterns (Dp_{ref1, ...,} Dp_{refn}) distributed in a plurality of reference regions of interest (Ri_{ref1, ...,} Ri_{refn});
• Extracting (EXT₃) the value of reference (Vrᵢ) from at least one of said plurality of reference regions of interest (Ri_{ref1, ...,} Ri_{refn});
• Calculating (CLC₂) at least one print quality metric (Pmᵢ) using the first value of interest (Vaᵢ₁) and using the extracted value of reference (Vrᵢ),
wherein the adjusted working parameters (Z_{adj}) are automatically generated using said calculated print quality metric (Pmᵢ).

7. The method (100) according to any of claims 5 to 6, comprising a step of extracting a plurality of values of reference (Vr_{1, ...,} Vrₙ) from the plurality of regions of interest (Ri_{ref1}, ..., Ri_{refn}) to calculate a plurality of print quality metrics (Pmᵢ), and wherein the adjusted working parameters (Z_{adj}) are generated using said calculated plurality of print quality metrics (Pm₁, ..., Pmᵢ).

8. The method (100) according to any of claims 1 to 7, wherein the first value of interest (Vai₁) and the second value of interest (Vai₂) are extracted from a same region of interest of the plurality of regions of interest (Ri₁, _{...}, Riₙ).

9. The method (100) according to any of claims 1 to 8, comprising extracting a plurality of values of interest (Va₁, ..., Vaᵢ) from at least two distinct regions of interest of the plurality of regions of interest (Ri₁, ..., Riₙ), and wherein the adjusted working parameters (Z_{adj}) are generated using said plurality of values of interest (Va₁, ..., Vaᵢ).

10. The method according to any of claims 1 to 9, comprising automatically generating at least one predicted print quality score (MSci) and/or at least one predicted print quality metric (MPmᵢ) by means of a machine learning algorithm (MLᵢ) using at least one digitized image (110) as input data of said machine learning algorithm (MLᵢ).

11. The method (100) according to claim 10, wherein the plurality of training digitized images (110") used to train the machine learning algorithm (MLᵢ) are labelled according to an expected human rating of their print quality.

12. A system (1000) comprising at least one calculator (112) and at least one communication interface (111), said system (1000) being configured to execute the steps of the computer implemented method (100) according to any of claims 1 to 11.

13. The system (1000) according to claim 12, further comprising the printing apparatus (1) comprising the endless ribbon (5), the coating module (7), and the ink rejuvenation device, and at least one optical detection device (26) to detect the printed element (25).

14. A computer program product comprising instructions to cause the system (1000) of claim 13 to execute the steps of the method of any of claims 1 to 11.

15. A computer-readable medium having stored thereon the computer program of claim 14.
